**Europäisches Patentamt**

**European Patent Office**

**Office européen des brevets**

(11) Veröffentlichungsnummer: **0 124 100**
**A1**

# (12) EUROPÄISCHE PATENTANMELDUNG

(21) Anmeldenummer: **84104736.8**

(22) Anmeldetag: **27.04.84**

(51) Int. Cl.³: **G 06 F 15/20**

(30) Priorität: **29.04.83 DE 3315602**

(43) Veröffentlichungstag der Anmeldung: **07.11.84**
**Patentblatt 84/45**

(84) Benannte Vertragsstaaten: **DE FR GB IT**

(71) Anmelder: **Licentia Patent-Verwaltungs-GmbH,**
**Theodor-Stern-Kai 1, D-6000 Frankfurt/Main 70 (DE)**

(72) Erfinder: **Müllauer, Heinz, Ing. grad., Zur Breite 11,**
**D-7753 Allensbach 2 (DE)**
Erfinder: **Treiber, Heinz, Ing. grad., Berchenstrasse 44,**
**D-7750 Konstanz (DE)**

(74) Vertreter: **Schulze, Harald Rudolf, Dipl.-Ing. et al,**
**Licentia Patent-Verwaltungs-GmbH**
**Theodor-Stern-Kai 1, D-6000 Frankfurt/Main 70 (DE)**

(54) **Einrichtung zur Erfassung und Auswertung von Bilddaten.**

(57)  Für eine Einrichtung zur Erfassung und Auswertung von Bilddaten wird vorgeschlagen, die Bilddaten dreidimensional in einem Bildspeicher zu speichern, wobei zwei Koordinaten der Lage eines Bildpunktes in einer Bildmatrix und die dritte Koordinate der Farb- und/oder Grauwertintensität zugeordnet sind. Innerhalb der Bildmatrix ist der auszuwertende Bildbereich durch eine Zone festlegbar und innerhalb der Zone wiederum sind die auszuwertenden Bildpunkte durch ein Fenster eingrenzbar, in welchem die Bildpunkte in einer vorgebbaren Reihenfolge ausgelesen werden können. Die Fenstergröße ist parametrierbar, ebenso die Schrittweite der Fensterbewegung, und das Fenster kann innerhalb der Zone in beliebiger Richtung verschoben werden.

0124100

Licentia Patent-Verwaltungs-GmbH       PTL-UL/Sar/1h
Theodor-Stern-Kai 1                     UL 82/118
D-6000 Frankfurt 70          Aktz.:  P 33 15 602.6


**Beschreibung**


**Einrichtung zur Erfassung und Auswertung von Bilddaten**

Die Erfindung betrifft eine Einrichtung zur Erfassung und
Auswertung von Bilddaten. Der Ausdruck "Bilddaten" wird
hier und im folgenden stellvertretend benutzt für große
Datenmengen wie Bilddaten, Textdaten, Koeffizientenmatritzen usw., welche dreidimensional gespeichert und
verarbeitet werden können. Ein Hauptproblem bei der Bilddaten-Erfassung und -Auswertung ist neben dem hohen Speicherbedarf der Aufwand für die logischen Verknüpfungs- und
Rechenoperationen.

Der Erfindung liegt die Aufgabe zugrunde, die Erfassung
gespeicherter Bilddaten so zu gestalten, daß der Aufwand
zur Adressierung dieser Bilddaten für die logischen Verknüpfungs- und Rechenoperationen wesentlich reduziert
wird.

...

0124100
UL 82/118

Die Aufgabe wird durch die im Anspruch 1 genannte Erfindung gelöst. Die erfindungsgemäße Lösung gestattet es leicht, aus der Menge der Bilddaten einen interessierenden Bildbereich auszusuchen, dort eine näher interessierende Struktur zu selektieren und diese durch eine besonders gewählte Adressierungsreihenfolge schnell zu erkennen und auszuwerten, so daß die Einrichtung besonders geeignet für eine Bildanalyse verwendet werden kann. Vorteilhafte Ausgestaltungen und Weiterbildungen der Erfindung sind in den Unteransprüchen angegeben. Die Unteransprüche 2 und 3 erlauben die zu analysierende Struktur schnell und vollständig zu erfassen. Die Ausgestaltungen der Erfindung nach den Ansprüchen 4 bis 6 gestatten eine optimale Analyse der sich innerhalb des Fensters befindenden Struktur. Die Erfindung ist daher mit Vorteil anwendbar für Blattleser, Anschriftenleser, Zellbildanalysatoren usf.

Die Erfindung wird nun anhand eines Ausführungsbeispiels und von Zeichnungen näher erläutert. Es zeigen im einzelnen:

FIG. 1    Bildmatrix mit Zone und Fenster

FIG. 2    Beispiel einer Adressierungsreihenfolge innerhalb eines Fensters

FIG. 3    Beispiel einer Adressierungsreihenfolge in einem Koppelfeldspeicher

FIG. 4    Bildmatrix mit zwei Zonen

FIG. 5    Einrichtung zur Erfassung und Auswertung von Bilddaten.

...

0124100
UL 82/118

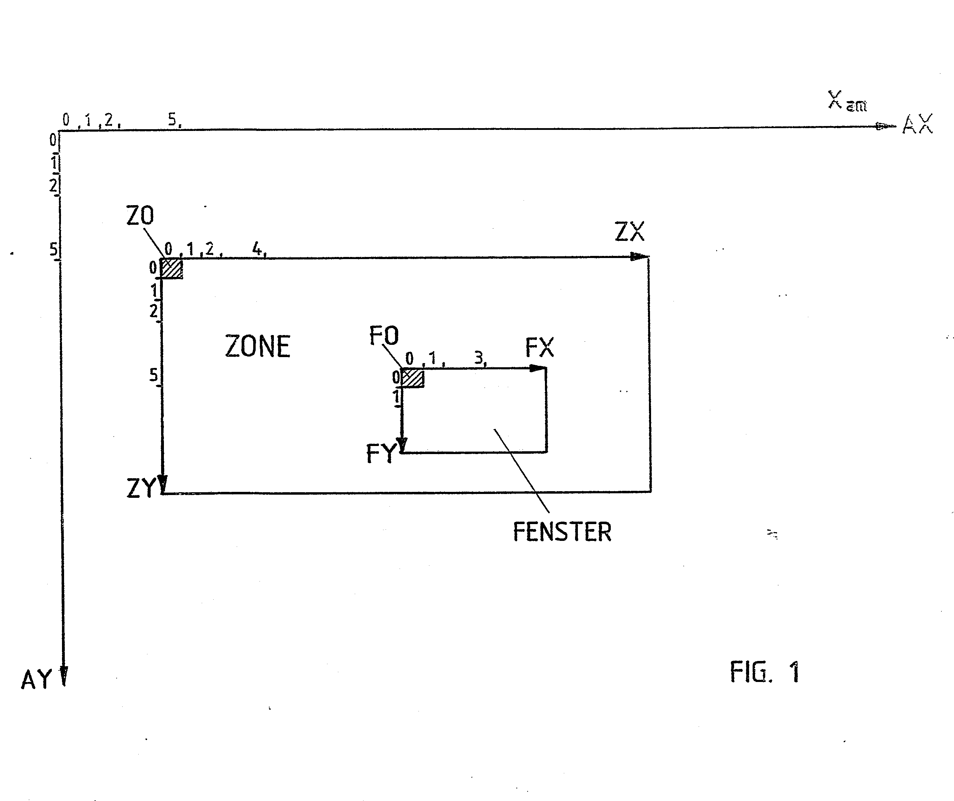

In FIG. 1 sind mit AX und AY die Koordinaten einer, in einem Bildspeicher abgelegten Bildmatrix beschrieben. Die Bilddaten sind im Bildspeicher von einem Quelladressen-Werk dreidimensional gespeichert worden, wobei die beiden Koordinaten AX und AY der Lage eines Bildpunktes in der Bildmatrix zugeordnet sind und eine dritte Koordinate AZ die Farb- und/oder Grauwertintensität beschreibt. Innerhalb der Bildmatrix AX, AY ist nun gemäß der Erfindung eine Zone mit den Koordinaten ZX und ZY und dem Zonennullpunkt ZO adressierbar und innerhalb der Zone ZX, ZY ein Fenster mit den Koordinaten FX und FY mit dem Fensternullpunkt FO. Mittels der Zone kann somit ein auszuwertender Bildbereich und mittels des Fensters ein interessierendes Bilddetail untersucht werden, wobei die Bildpunkte des Fensters in einer vorgegebenen Reihenfolge ausgelesen werden können.

Für einen Bildpunkt ergibt sich somit folgende Adresse:

BPX: = ZOX + FOX + FX     (in X-Richtung)
BPY: = ZOY + FOY + FY     (in Y-Richtung)

Durch diese Adressierungsform ergeben sich folgende vorteilhafte Möglichkeiten:

1. Interessierende Bildbereiche können aus einer, aus vielen Bildpunkten bestehenden Bildmatrix sehr schnell adressiert und ausgewertet werden, wie es z.B. erforderlich ist für eine Schriftzeichenerkennung, Zellkernanalyse, Produktionsautomatisierung, Materialtransportkontrolle, Qualitätskontrolle und vieles andere mehr.

2. Fenstergröße und unter Umständen auch die Zonengröße sind durch die Wahl der jeweiligen Koordinatenendpunkte in einfacher Weise parametrierbar.

3. Da durch die o.g. Zusammensetzung der Adressen die jeweiligen Koordinatennullpunkte ZO und FO der Zone bzw. des Fensters einfach geändert werden können, lassen sich Zone und Fenster unabhängig voneinander in gewünschter Weise über der Bildmatrix verschieben. Dabei ist die Schrittweite der Fensterbewegung sowohl in X- als auch in Y-Richtung parametrierbar.

4. Innerhalb des Fensters kann die Adressierungsreihenfolge der Bildpunkte beliebig gewählt werden, wobei die Adressierungsreihenfolge unabhängig von der Fensterbewegungsrichtung ist. Dabei können für das jeweilige Problem als besonders günstig erkannte Adressierungsreihenfolgen in einem Koppelfeldspeicher abgelegt und von dort bei Bedarf aufgerufen werden. Als Koppelfeldspeicher sind RAM-Speicher (Random-Access-Memory) vorteilhaft, wenn die Einrichtung vielseitig einsetzbar sein soll und daher die Funktionsblöcke öfter ausgetauscht oder optimiert werden sollen. ROM-Speicher (Read-Only-Memory) sind nur zur Speicherung konstanter, für den jeweiligen Anwendungsfall bewährte Funktionsblöcke zweckmäßig.

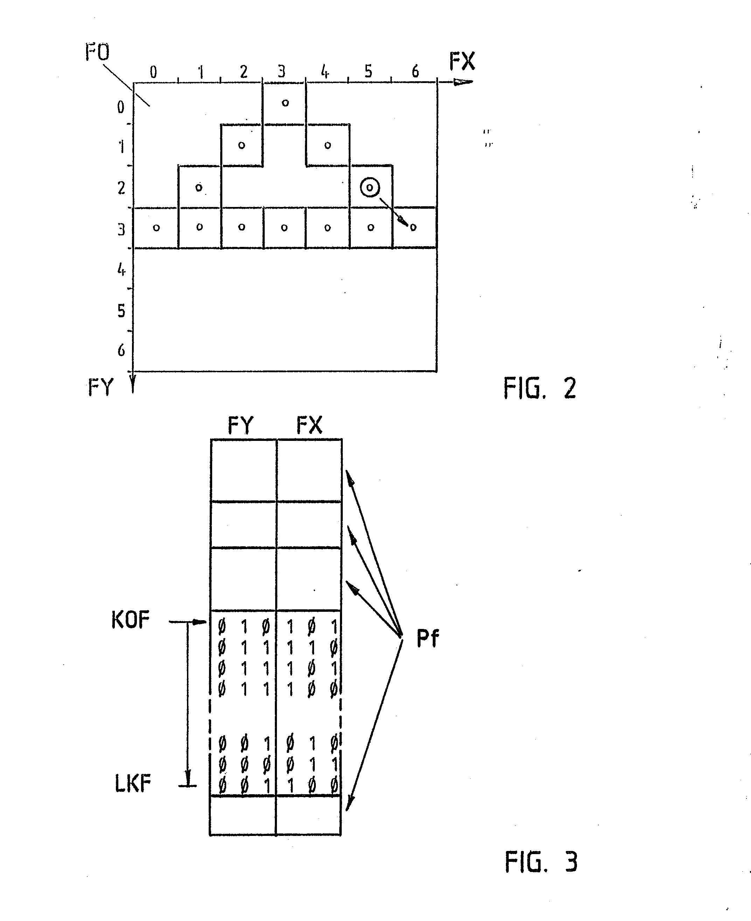

In FIG. 2 ist beispielsweise eine bestimmte Adressierungsreihenfolge innerhalb eines Fensters mit den Koordinaten, ab Fensternullpunkt gerechnet, $FX = 6$ und $FY = 6$ dargestellt. Die Adressierung möge am Bildpunkt $FX = 5$; $FY = 2$ beginnen und rechts umlaufend der Dreiecksfunktion folgen.

...

Es wird also der Reihe nach

| FX | 5 | 6 | 5 | 4 | .... | 4 | |
|----|-----|-----|-----|-----|------|-----|--------|
| FY | 2 | 3 | 3 | 3 | | 1 | |
| FX | 101 | 110 | 101 | 100 | | 100 | Tab. 1 |
| FY | 010 | 011 | 011 | 011 | | 001 | |

adressiert und der entsprechende Bildpunkt gelesen.

Die 3. und 4. Zeile der Tabelle 1 gibt den jeweiligen
dekadischen Wert im Dualsystem wieder.

FIG. 3 zeigt ein Beispiel für die Belegung der dualen
Speicherplätze eines Koppelfeldspeichers. In den drei
ersten Spalten sind die FY-Koordinaten und in den drei
weiteren Spalten die FX-Koordinaten abgespeichert. Die
eingetragenen Dualzahlen sind der unteren Hälfte der
Tabelle 1 entnommen. Sie beziehen sich also auf das in
FIG. 2 gezeigte Beispiel, wobei mit KOF in FIG. 3 die
Anfangsadresse und mit LKF die Endadresse der Adressierungsreihenfolge bezeichnet sind. In den mit Pfeilen Pf
angedeuteten Speicherbereichen des Koppelfeldspeichers
können weitere Adressierungsreihenfolgen abgelegt sein.

Ein Sonderfall ist das sequentielle Adressieren aller
Bildpunkte im Fenster. Um in diesem Fall den Aufwand für
den Koppelfeldspeicher zu sparen, enthält die Einrichtung
ein Prozeßwerk mit einem bestimmten "Fensteradressierungsmodus". Dieser Fensteradressierungsmodus teilt dem Adressierungswerk durch Steuerzeichen mit, wie die sequentielle
Adressierung ablaufen soll, ob in X-Richtung von links
nach rechts oder ob in Y-Richtung von oben nach unten.

...

Häufig ist es erforderlich, einen Vergleich zweier sich innerhalb der Bildmatrix befindlichen Strukturen vorzunehmen. Es ist für derartige Fälle zweckmäßig, daß eine zweite Zone mit den Koordinaten $Z_2X$ und $Z_2Y$ adressierbar ist.

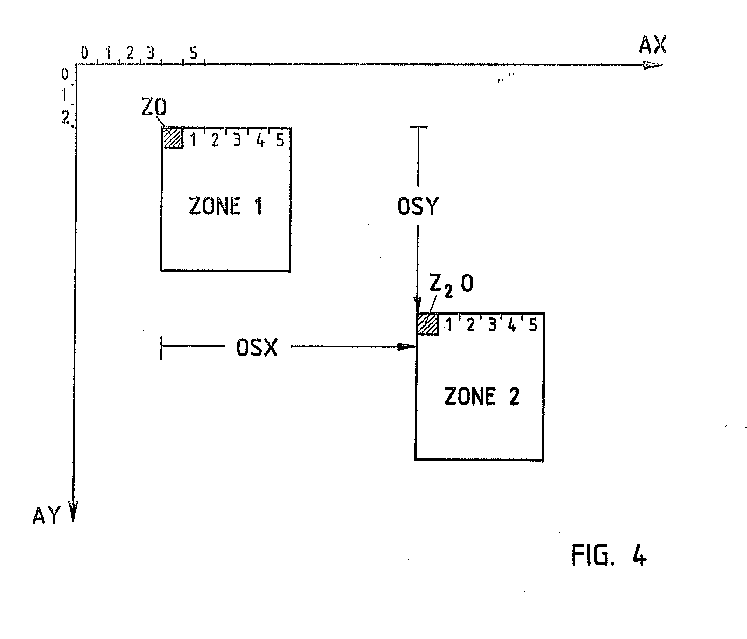

In FIG. 4 ist eine Bildmatrix mit zwei dort definierten Zonen dargestellt. Gelten alle Parametrierungen der ersten Zone auch für die zweite Zone, so können die Bildstrukturen rasch eingegrenzt, damit die Anzahl der auszuwertenden Bildpunkte rasch reduziert und der Vergleich der Strukturen durch Verknüpfung gleichgelagerter Bildpunkte einfach und schnell durchgeführt werden. Bei zeilenweisem Vergleich der Bildpunkte ergibt sich z.B. die alternierende Adressenfolge:

$$1;1';2;2';3;3';4;4';\ldots$$

Für die Bestimmung der zweiten Zone ist es vorteilhaft, mittels der Koordinaten OSX und OSY, wie in FIG. 4 gezeigt, den Offset der zweiten Zone zur ersten Zone zu verwenden.

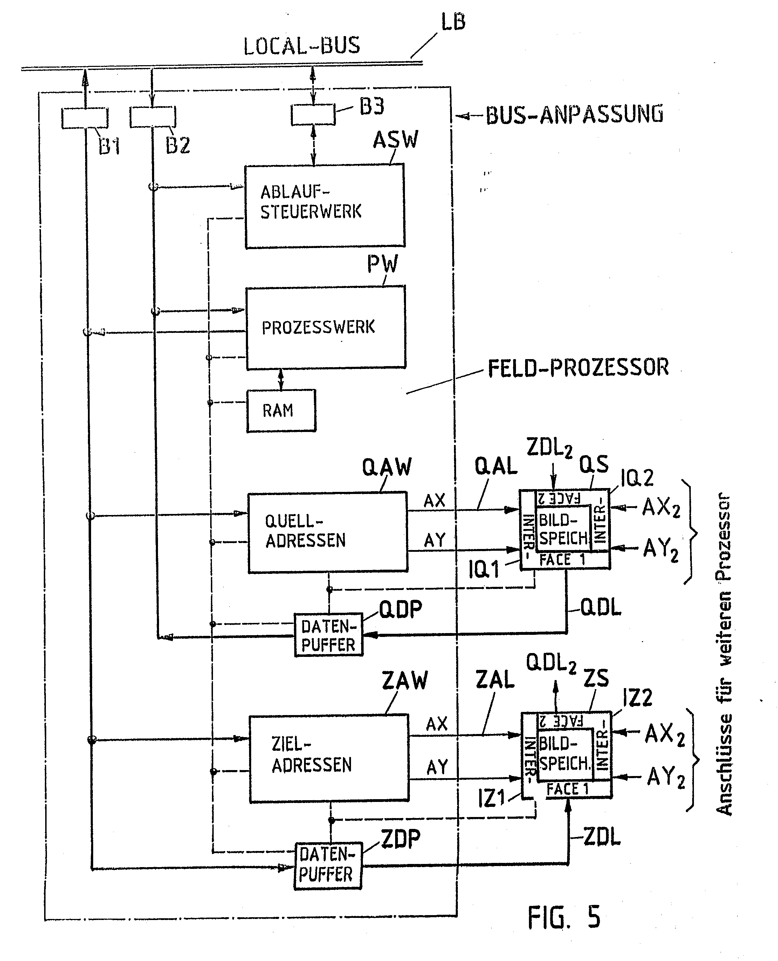

In FIG. 5 ist eine vorteilhafte Einrichtung zur Erfassung und Auswertung von über einen Local-Bus angelieferte Bilddaten dargestellt, die intern eine Fließbandverarbeitung von Bilddaten gestattet. Sie umfaßt ein Ablaufsteuerwerk ASW, ein Prozeßwerk PW, ein Quelladressen-Werk QAW, ein Zieladressen-Werk ZAW, einen Bildspeicher QS und einen zweiten Bildspeicher ZS. Das Prozeßwerk PW, das Quelladressen-Werk QAW und das Zieladressen-Werk ZAW sind über eine erste Bus-Anpassung B1 mit dem Local-Bus LB verbun-

...

den. Das Ablaufsteuerwerk ASW und das Prozeßsteuerwerk sind über eine zweite Bus-Anpassung B2 mit dem Local-Bus LB verbunden. Ferner führt eine weitere Verbindungsleitung zwischen Ablaufsteuerwerk ASW über eine dritte Bus-Anpassung B3. Außerdem ist ersichtlich, daß das Quelladressen-Werk QAW über Adressenleitungen QAL mit dem Bildspeicher QS verbunden ist. Dessen Datenausgang ist über eine Datenleitung QDL an das Ablaufsteuerwerk ASW und das Prozeßwerk PW angeschlossen. Desweiteren ist in ähnlicher Weise das Zieladressen-Werk ZAW über Adressenleitungen ZAL mit dem Bildspeicher ZS verbunden, dessen Datenausgang über eine Datenleitung ZDL an der Bus-Anpassung B1 angeschlossen ist.

Das Quelladressen-Werk QAW sorgt für die Bereitstellung der Quelldaten. Diese Quelldaten können über eine erste Bildspeicherschnittstelle IQ2 entweder vom selben Prozessor oder von einem weiteren, in FIG. 5 nicht dargestellten Prozessor im (Quelldaten)-Bildspeicher QS abgelegt worden sein. Ablaufsteuerwerk ASW und Prozeßwerk PW führen Elementarprozesse durch wie z.B.:
arithmetische Bildpunktoperationen, z.B. Additionen,
    Subtraktionen und Multiplikationen;
Meßoperationen, wie z.B. die Bestimmung von Amplitudenverteilungen;
Koppeloperationen, wie z.B. Medianfilterung oder Erosion;
Schwellenoperationen.

Das Zieladressen-Werk ZAW sorgt für eine vorgegebene Ablage der Ergebnisdaten.

0124100
UL 82/118

Vorgegebene Adressenreihenfolgen entnimmt das Prozeßwerk
einem vom Ablaufsteuerwerk ASW steuerbaren löschbaren
und/oder einem nichtlöschbaren Speicher, von denen in
FIG. 5 nur der mit RAM bezeichnete löschbare Speicher
dargestellt ist.

Systematische Adressen, wie z.B. zeilen- oder spaltenweises Adressieren werden von den Adressen-Werken QAW und ZAW
selbsttätig durchgeführt. Ebenso steuern die Adressen-Werke die Bildspeicher QS und ZS und melden eine Auftragserledigung an das Ablaufsteuerwerk ASW.

Um einen Datenstau oder Datenmangel zwischen gelesenen
Daten und zu verarbeitenden Daten und umgekehrt zu vermeiden, sind zwischen dem Bildspeicher QS und der Verbindungsleitung zwischen Ablaufsteuerwerk ASW und Prozeßwerk
PW ein Datenpuffer QDP und zwischen dem Bildspeicher ZS
und der Bus-Anpassung B1 ein Datenpuffer ZDP geschaltet.

Das Prozeßwerk PW erteilt den Adressen-Werken QAW und ZAW
den Auftrag, eine Adressensequenz in einer vorgegebenen
Weise zu berechnen, entsprechend die Bildspeicher QS bzw.
ZS zu adressieren und das Lesen bzw. Schreiben der Daten
zu steuern. Dazu stellt das Prozeßwerk PW eine Parameterliste zusammen und überträgt diese an das jeweilige Adressenwerk. Die Parameterliste enthält:

- Basisadressen: die Koordinaten des Zonen-Nullpunktes und
  die Anfangsadresse eines Koppelfeldes im Koppelfeldspeicher
- Begrenzungsdaten zu Adressenfeldern: Zonenlänge in
  XY-Richtung, Fensterlänge und Länge des Koppelfeldes im
  Koppelfeldspeicher

...

0124100
UL 82/118

- Steuerparameter: Fensterbewegungsrichtung, Adressierungsfolge innerhalb eines Fensters, Fensterschrittweite, Daten lesen oder schreiben und physikalische Adresse des gewünschten Bildspeichers
- Synchronisationsparameter: zur Kontrolle des Gleichlaufs zwischen bearbeiteten und adressierten Daten.

Aus diesen Parametern berechnet das jeweilige Adressierwerk die erste Bildpunktadresse im ersten, durch den Fensterausschnitt freigegebenen Adressenbereich.

Die Speicherzyklusanmeldung erfolgt
- bei Schreiben in den Bildspeicher erst dann, wenn im Daten-Puffer ein Datenzeichen bereitgestellt ist,
- bei Lesen aus dem Bildspeicher dann, wenn der Daten-Puffer ein Datenzeichen aufnehmen kann.

Die nächste Bildpunktadresse wird parallel zum Lese-/-Schreibzyklus errechnet, wodurch ein überlappender Betrieb entsteht. Dies ist zweckmäßig, um eine möglichst hohe Übertragungsrate zu erreichen. In der genannten Weise wird die gesamte Zone abgearbeitet. Das Erreichen des Zonenendes wird vom Prozeßwerk PW durch eine Statusmeldung mitgeteilt. Während der gesamten Adressierungssequenz setzt das jeweilige Adressen-Werk Synchronisierungsmarken, so daß die Adressierungssequenz auf Synchronität überprüfbar ist.

Die in FIG. 5 dargestellte, an den Local-Bus angeschlossene Einheit gestattet in einfacher Weise eine vollständig selbständige Bearbeitung von Bildpunktdaten, welche
- über den Local-Bus LB angeliefert werden können. Dann müssen die Bildspeicher QS und ZS als ein physikalischer

0124100
UL 82/118

Speicher betrachtet werden; das Ergebnis wird an den Local-Bus zurückgeliefert.

- über einen 2. Prozessor im Bildspeicher QS abgelegt werden können. Dann kann das Ergebnis über den Bildspeicher ZS an diesen 2. Prozessor oder über den Bildspeicher ZS an einen 3. Prozessor oder unter Umgehung des Bildspeichers ZS direkt an den Local-Bus zurückgeliefert werden.

Licentia Patent-Verwaltungs-GmbH     PTL-UL/Sar/lh
Theodor-Stern-Kai 1                   UL 82/118
D-6000 Frankfurt 70


Patentansprüche


1. Einrichtung zur Erfassung und Auswertung von Bilddaten, dadurch gekennzeichnet, daß die Bilddaten in einem
Bildspeicher dreidimensional gespeichert werden, wobei
zwei Koordinaten (AX,AY) der Lage eines Bildpunktes in
einer Bildmatrix und die dritte Koordinate (AZ) der Farb-
und/oder Grauwertintensität zugeordnet sind,
daß innerhalb der Bildmatrix (AX, AY) der auszuwertende
Bildbereich durch eine Zone (ZX, ZY) festlegbar ist,
daß innerhalb der Zone (ZX, ZY) die auszuwertenden Bildpunkte durch ein Fenster (FX, FY) eingrenzbar sind und daß
die Bildpunkte des Fensters (FX, FY) in einer vorgebbaren
Reihenfolge auslesbar sind.

2. Einrichtung nach Anspruch 1, dadurch gekennzeichnet,
daß die Fenstergröße parametrierbar ist.


. . .

0124100
UL 82/118

3. Einrichtung nach Anspruch 1 oder 2, dadurch gekennzeichnet, daß das Fenster innerhalb der Zone verschiebbar ist.

4. Einrichtung nach Anspruch 3, dadurch gekennzeichnet, daß die Schrittweite der Fensterbewegung in X- und Y-Richtung parametrierbar ist.

5. Einrichtung nach einem der vorhergehenden Ansprüche, dadurch gekennzeichnet, daß innerhalb des Fensters eine beliebige Adressierungsreihenfolge der Bildpunkte wählbar ist.

6. Einrichtung nach Anspruch 5, dadurch gekennzeichnet, daß die Adressierungsreihenfolge der Bildpunkte innerhalb des Fensters unabhängig von der Fensterbewegung ist.

7. Einrichtung nach Anspruch 6, dadurch gekennzeichnet, daß mindestens eine Adressierungsreihenfolge in einem Koppelfeldspeicher abgelegt ist.

8. Einrichtung nach einem der vorhergehenden Ansprüche, dadurch gekennzeichnet, daß innerhalb der Bildmatrix ($AX$, $AY$) eine zweite Zone ($Z_2X$, $Z_2Y$) für einen zweiten Bildbereich festlegbar ist.

9. Einrichtung nach einem der vorhergehenden Ansprüche, gekennzeichnet durch seine Verwendung zur Bildverarbeitung.

10. Einrichtung zur Erfassung und Auswertung von über einen Local-Bus angelieferten Bilddaten, dadurch gekennzeichnet, daß sie mindestens ein Ablaufsteuerwerk (ASW),

0124100
UL 82/118

ein Prozeßwerk (PW), ein Quelladressen-Werk (QAW), ein Zieladressen-Werk (ZAW), einen ersten Bildspeicher (QS), einen zweiten Bildspeicher (ZS) umfaßt, daß das Prozeßwerk (PW), das Quelladressen-Werk (QAW) und das Zieladressen-Werk (ZAW) über eine erste Bus-Anpassung (B1), das Ablaufsteuerwerk (ASW) und das Prozeßsteuerwerk über eine zweite Bus-Anpassung (B2) und das Ablaufsteuerwerk (ASW) über eine dritte Bus-Anpassung (B3) mit dem Local-Bus (LB) verbunden sind, daß das Quelladressen-Werk (QAW) über erste Adressenleitungen (QAL) mit dem ersten Bildspeicher (QS) verbunden ist, dessen Datenausgang über eine erste Datenleitung (QDL) mit dem Ablaufsteuerwerk (ASW) und dem Prozeßwerk (PW) verbunden sind, und daß das Zieladressen-Werk (ZAW) über zweite Adressenleitungen (ZAL) mit dem zweiten Bildspeicher (ZS) verbunden ist, dessen Datenausgang über eine zweite Datenleitung (ZDL) an der ersten Bus-Anpassung (B1) angeschlossen ist.

11. Einrichtung nach Anspruch 10, dadurch gekennzeichnet, daß erster Bildspeicher (QS) und zweiter Bildspeicher (ZS) physikalisch zu einem Bildspeicher zusammenfaßbar sind.

12. Einrichtung nach Anspruch 10, dadurch gekennzeichnet, daß zwischen dem ersten Bildspeicher (QS) und der Verbindungsleitung von Ablaufsteuerwerk (ASW) und Prozeßwerk (PW) ein erster Daten-Puffer (QDP) und zwischen dem zweiten Bildspeicher (ZS) und der ersten Bus-Anpassung (B1) ein zweiter Datenpuffer (ZDP) geschaltet ist.

13. Einrichtung nach einem der Ansprüche 10 bis 12, dadurch gekennzeichnet, daß an das Prozeßwerk (PW) ein vom Ablaufsteuerwerk (ASW) steuerbarer löschbarer Speicher (RAM) angeschlossen ist.

. . .

FIG. 1

0124100

1/4

FIG. 2

FIG. 3

FIG. 4

LOCAL-BUS    LB

B1   B2   B3    ← BUS-ANPASSUNG

ABLAUF-STEUERWERK   ASW

PROZESSWERK   PW

RAM

FELD-PROZESSOR

QAW   QAL   $ZDL_2$   QS   IQ2

QUELL-ADRESSEN   AX   AY

INTER-FACE 2   BILD-SPEICH.   INTER-FACE 1

$AX_2$   $AY_2$

IQ1

QDP   DATEN-PUFFER   QDL

ZAW   ZAL   $QDL_2$   ZS   IZ2

ZIEL-ADRESSEN   AX   AY

INTER-FACE 2   BILD-SPEICH.   INTER-FACE 1

$AX_2$   $AY_2$

IZ1

ZDP   DATEN-PUFFER   ZDL

Anschlüsse für weiteren Prozessor

FIG. 5

Europäisches
Patentamt

**EUROPÄISCHER RECHERCHENBERICHT**

0124100
Nummer der Anmeldung

EP 84 10 4736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | IBM TECHNICAL DISCLOSURE BULLETIN, Band 14, Nr. 10, März 1972, Seiten 2994-2996, New York, USA; N. HERBST et al.: "Variable core-size linear transformation program" * Insgesamt * | 1 | G 06 F 15/20 |
| | --- | | |
| Y | GB-A-1 547 119 (EVANS) * Seite 1, Zeilen 59-74; Seite 2, Zeilen 53-128; Figuren 2,3 * | 1 | |
| | ----- | | |

RECHERCHIERTE
SACHGEBIETE (Int. Cl. ³)

G 06 F 15/20

Der vorliegende Recherchenbericht wurde für alle Patentansprüche erstellt.

| Recherchenort DEN HAAG | Abschlußdatum der Recherche 31-07-1984 | Prüfer BURGAUD C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82